(19)

Europäisches
Patentamt
European
Patent Office
Office européen
des brevets

(11) **EP 1 444 686 B1**

(12) **EUROPEAN PATENT SPECIFICATION**

(45) Date of publication and mention
of the grant of the patent:
**11.03.2009 Bulletin 2009/11**

(51) Int Cl.:
***G10L 13/08*** (2006.01)

(21) Application number: **02802680.5**

(86) International application number:
**PCT/IB2002/004495**

(22) Date of filing: **29.10.2002**

(87) International publication number:
**WO 2003/041051 (15.05.2003 Gazette 2003/20)**

(54) **HMM-BASED TEXT-TO-PHONEME PARSER AND METHOD FOR TRAINING SAME**

HMM-BASIERTE ZERLEGUNG VON TEXTEN IN PHONEME UND TRAININGSVERFAHREN

ANALYSEUR TEXTE-PHONEME S'APPUYANT SUR LE HMM ET PROCEDE PERMETTANT D'ENTRAINER LEDIT ANALYSEUR

(84) Designated Contracting States:
**DE GB NL**

(30) Priority: **06.11.2001 US 13239**

(43) Date of publication of application:
**11.08.2004 Bulletin 2004/33**

(60) Divisional application:
**07015758.1 / 1 850 323**

(73) Proprietor: **D.S.P.C. Technologies LTD.**
**Pethach Tikva 49527 (IL)**

(72) Inventor: **GRINIASTY, Meir**
**Tel Aviv (IL)**

(74) Representative: **Dunlop, Hugh Christopher et al**
**R.G.C. Jenkins & Co.**
**26 Caxton Street**
**London SW1H 0RJ (GB)**

(56) References cited:
**US-A- 5 995 926**

• LUK R W P ET AL: "STOCHASTIC PHONOGRAPHIC TRANSDUCTION FOR ENGLISH" COMPUTER SPEECH AND LANGUAGE, ELSEVIER, LONDON, GB, vol. 10, 1996, pages 133-153, XP001011165 ISSN: 0885-2308
• LUK R W P ET AL: "STOCHASTIC PHONOGRAPHIC TRANSDUCTION FOR ENGLISH" COMPUTER SPEECH AND LANGUAGE, ACADEMIC PRESS, LONDON, GB, vol. 10, 1996, pages 133-153, XP001011165 ISSN: 0885-2308
• DUTOIT T: "Introduction To Text-To-Speech Synthesis" AN INTRODUCTION TO TEXT-TO-SPEECH SYNTHESIS, TEXT, SPEECH AND LANGUAGE TECHNOLOGY, vol. 3, 1997, pages 115-125, XP002157980 DORDRECHT: KLUWER ACADEMIC PUBL, NL ISBN: 0-7923-4498-7

**Description**

FIELD OF THE INVENTION

The invention relates generally to speech processing and, more particularly, to speech recognition systems and techniques.

BACKGROUND OF THE INVENTION

In some speech recognition systems, hidden Markov models (HMMs) of words are obtained by a concatenation of phoneme HMM's. To build word models in such systems, one needs to know the phoneme string that corresponds to the word. In many cases, the phoneme string for a word (i. e. , the pronunciation) can be found in a phonetic dictionary. However, many valid words (e. g. , family names, business names, etc.) are not typically included within a phonetic dictionary. Therefore, there is a general need for a text-to-phoneme parser that can automatically generate a phoneme string for a written word.

Luk RWP et al.: "Stochastic Phonographic Transduction for English" Computer Speech and Language, Elsevier London, vol. 10, 1996, pages 133-153 discloses a stochastic phonographic transduction (SPT) trainable technique for letter-to-phoneme conversion based on formal language theory according to the preamble of the independent claims of the present invention.

US-A-5 995 926 discloses a technique for effectively recognising sequence of digits in voice dialing and improving the accuracy of the recogniser through determining whether the value of each updated conditional digit pair probability is less than a predetermined minimum threshold in order to prevent the value of a conditional digit pair probability from reaching zero.

BRIEF DESCRIPTION OF THE DRAWINGS

Fig.1 is a diagram illustrating a conventional HMM process;
Fig. 2 is a block diagram illustrating a text-to-phoneme parsing system in accordance with an embodiment of the present invention;
Figs. 3 and 4 are portions of a flowchart illustrating a method of training an HMM-based text-to-phoneme parser system in accordance with an embodiment of the present invention;
Fig. 5 is a diagram illustrating a two-dimensional Viterbi search table in accordance with an embodiment of the present invention; and
Fig. 6 is a diagram illustrating a modified HMM process in accordance with an embodiment of the present invention.

DETAILED DESCRIPTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The present invention as claimed in claims 1, 13 and 14, relates to methods and structures for training and implementing a text-to-phoneme parser that uses hidden Markov models (HMM). Unlike parsers that utilize decision tree technology, an HMM-based text-to-phoneme parser does not require the use of expert linguistic knowledge during a training session. An HMM-based parser also uses significantly less memory than a decision tree parser. In addiction, while decision tree parsers typically generate a single pronunciation for a given word, HMM-based text-to-phoneme parsers are capable of generating multiple different pronunciations for a word with corresponding reliability information. As can be appreciated; this feature may be used to improve speech recognition accuracy. The inventive principles may be used in connection with a wide variety of languages and are most beneficial with languages that have relatively complex rules governing the relationship between text and speech (e.g., English).

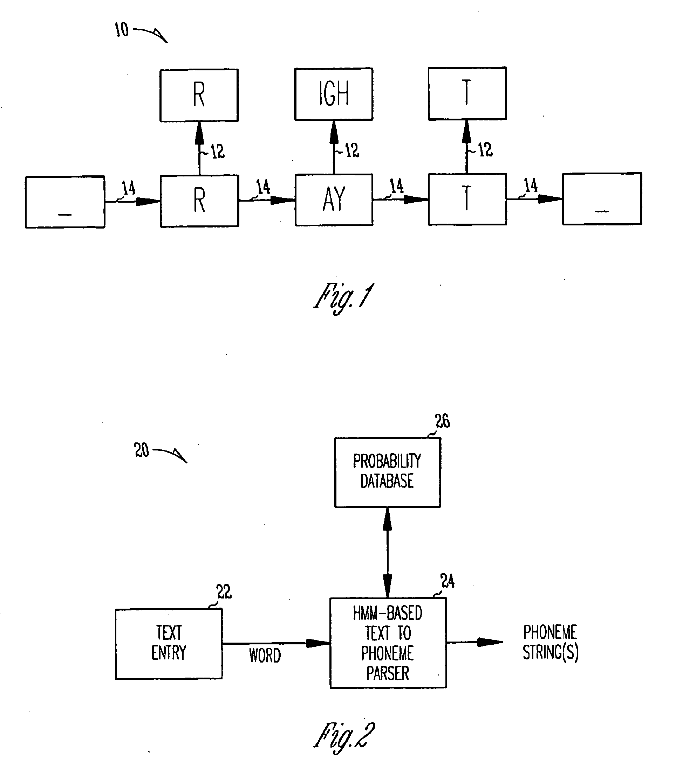

Phonemes represent the basic sounds that are used to build words. In a speech system using HMMs, both the letters and the phonemes of a word are used to form an HMM for the word. The phonemes of the word correspond to the hidden states of the HMM and obey a first order Markov process. Fig. 1 is a diagram illustrating a conventional HMM process 10 as applied to the word "right." On the upper portion of the diagram are the letters of the word arranged as a series of letter strings (i.e., "R," "1GH," and "T"). On the lower portion of the diagram are the phonemes that make up the spoken word (i.e., "R," "AY," and "T"). The blocks having a "_" symbol within them represent the empty phoneme (i.e., the silence phoneme). As part of the HMM process 10, the phonemes of the word are said to "emit" the corresponding letter strings. These emissions are represented in Fig. 1 by arrows 12. The Markov process also takes into consideration the transitions between successive phonemes in the word. These transitions are represented in Fig. 1 by arrows 14.

Fig. 2 is a block diagram illustrating a text-to-phoneme parsing system 20 in accordance with an embodiment of the present invention. As illustrated, the system 20 includes: a text entry unit 22, an HMM-based text-to-phoneme parser 24, and a probability database 26. The text entry unit 22 is operative for submitting a written word to the HMM-based text-to-phoneme parser 24 for processing. The text entry unit 22 may include, for example, a computer keyboard or other manual data entry device that allows a user to input a word. Other types of text entry device are also possible. The HMM-based text-to-phoneme parser 24 analyzes the written word to determine one or more phoneme strings for the word. The phoneme string(s) that is (are) generated may then be used to develop one or more Markov models for the corresponding word. To generate a phoneme string for an input word, the HMM-based text-to-phoneme parser 24 uses probability information stored within the probability database 26. Among other things, the probability database 26 will often include information relating to transition and emission probabilities for a given phonetic dictionary. The HMM-based text-to-phoneme parser 24 uses this information during the Markov process to identify one or more phoneme strings having the highest likelihood(s) for the input word.

Before the system 20 of Fig. 2 can be used, the system needs to be "trained" to develop the probability information in the database 26. This training will characterize the statistical connection between the letters and phonemes of the subject language. Before the training process is commenced, a number of assumptions may be made that relate to the makeup of the subject language. One such assumption places a limit on the length of the letter string that can be emitted by a single phoneme. For example, in at least one English language embodiment, it is assumed that a single phoneme can only emit letter strings that are from one to four letters in length. Another such assumption assumes that two phonemes can combine to emit a single letter (e.g., in the word "sex," phonemes "K" and "S" can combine to emit the letter "x"). Such combinations will be referred to herein as "diphones." In general, the diphones will not be known before training is commenced and thus need to be identified during training. Other assumptions may also be made.

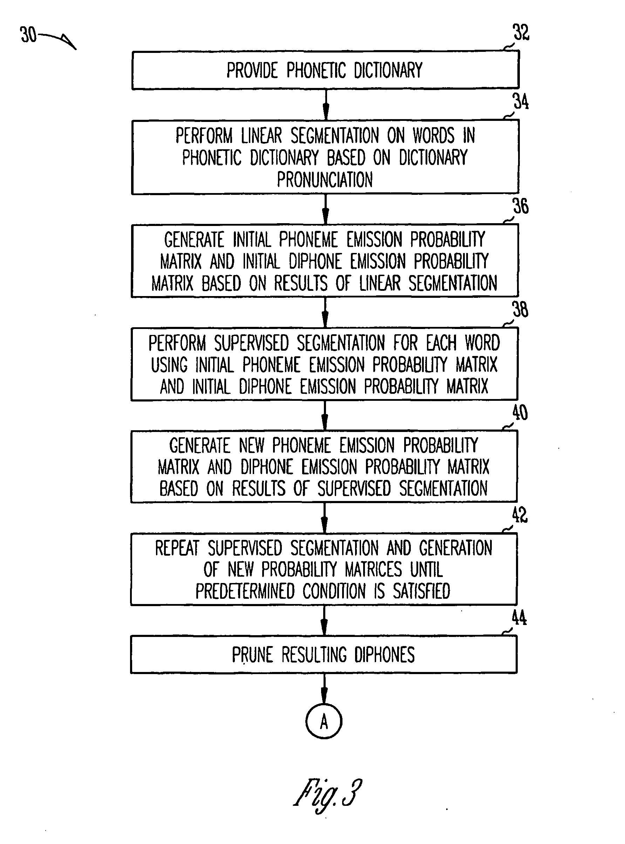

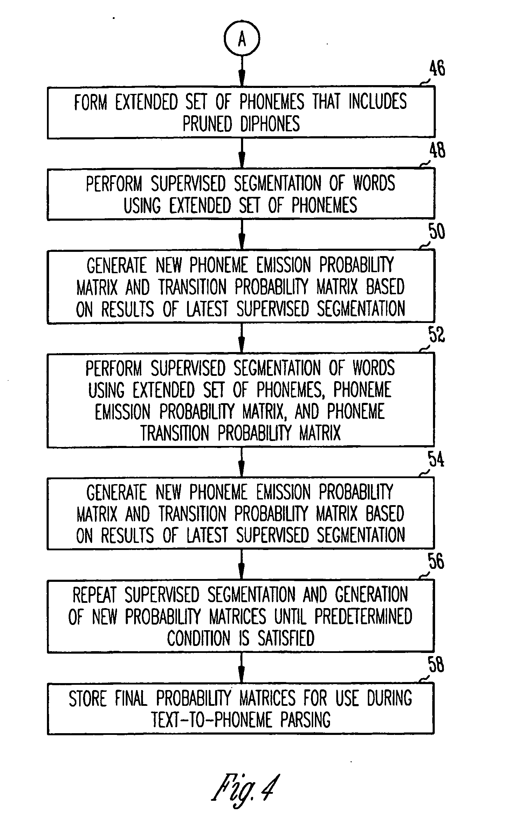

Figs. 3 and 4 are portions of a flowchart illustrating a method for training an HMM-based text-to-phoneme parser system in accordance with an embodiment of the present invention. In at least one implementation, some or all of the method is implemented in software for execution within one or more digital processing devices (e.g., a general purpose microprocessor, a digital signal processor (DSP), a reduced instruction set computer (RISC), a complex instruction set computer (CISC), a field programmable gate array (FPGA), and/or others). To initiate the training process, a phonetic dictionary is first provided that includes pronunciations for a given vocabulary of words (block 32). This dictionary may include, for example, any of a variety of commercially available phonetic dictionaries. In one implementation, the Carnegie Mellon University (CMU) Pronouncing Dictionary is used. The CMU Pronouncing Dictionary includes approximately 127,000 English words with their corresponding phonetic pronunciations. The CMU Pronouncing Dictionary also defines 39 individual phonemes in the English language. Other dictionaries may alternatively be used.

Linear segmentation is first performed on the words of the phonetic dictionary based on the corresponding pronunciations in the dictionary (block 34). During linear segmentation, each word is divided linearly into chunks, with the number of chunks equaling the number of phonemes in the corresponding dictionary pronunciation. If the number of phonemes exceeds the number of letters in the word, it may be assumed that a diphone is present. Based on the results of the linear segmentation, an initial phoneme emission probability matrix and diphone emission probability matrix are generated (block 36). The phoneme emission probability matrix includes probabilities that particular letter strings will be emitted by particular phonemes (i.e., P(letter string| phoneme)). The diphone emission probability matrix includes probabilities that particular letters will be emitted by particular phoneme pairs (i.e., P(letter | phoneme1, phoneme2)). In one approach, each probability is determined by a simple count using the linear segmentation information. For example, P(letter string | phoneme) will equal the number of occurrences of the letter string in conjunction with the phoneme divided by the total number of occurrences of the phoneme within the linear segmentation information. Similarly, P(letter| phoneme1, phoneme2) will equal the number of occurrences of the letter in conjunction with the phoneme pair (i.e., phoneme1, phoneme2) divided by the total number of occurrences of the phoneme pair in the linear segmentation information.

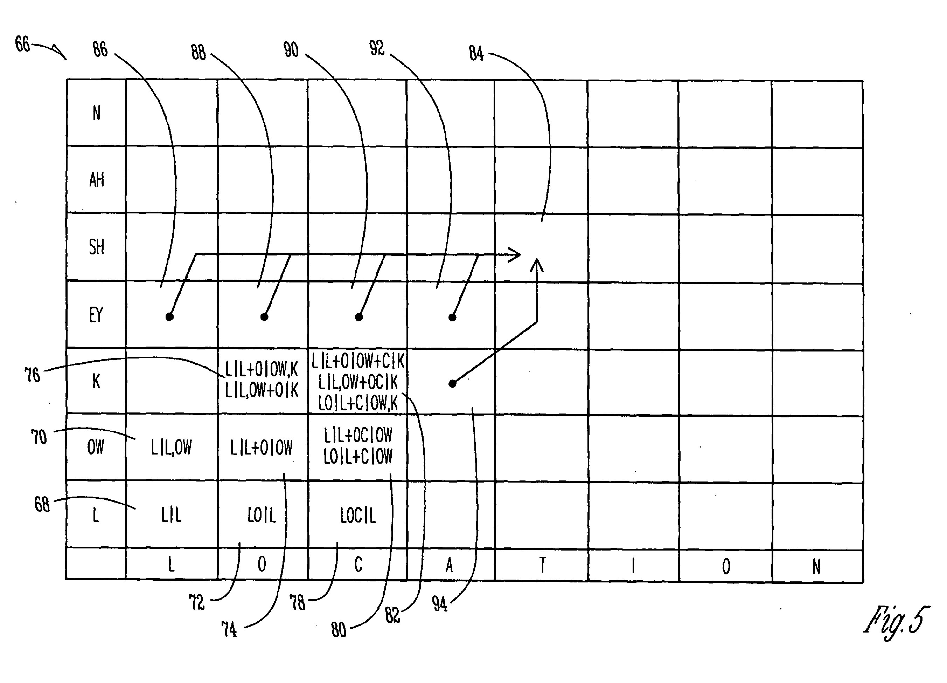

Using the initial emission probability matrices, a supervised segmentation is next performed to segment each word in the dictionary into its corresponding phonemes (block 38). This segmentation is called "supervised" segmentation because it is performed using a known string of phonemes. In one approach, the supervised segmentation is performed using Viterbi search techniques. Fig. 5 is a diagram illustrating a two-dimensional table 66 that may be used to perform a Viterbi search for the word "location." As shown, the horizontal axis of the table 66 lists the individual letters of the word (one letter to each column) and the vertical axis lists the individual phonemes for the word that were obtained from the phonetic dictionary (one phoneme to each row). Starting at square 68 in the lowermost left corner, a series of paths are developed through the table 66 to find a path that "most likely" represents the proper segmentation of the corresponding word. To ensure causality, the Viterbi process is preferably performed from left to right in the table 66 on a column by column basis, with all phonemes being addressed in one column before proceeding to the next. Probability scores are determined for individual paths in the table 66 using the information from the initial phoneme emission probability matrix and the initial diphone emission probability matrix. If log probabilities are used, the scores will typically consist of probability sums. If conventional probabilities are used, the scores will typically consist of probability products. In the discussion that follows, it is assumed that log probabilities are being used.

With reference to Fig. 5, within square 68, the probability that the phoneme "L" will emit the letter "L" is entered (indicated in the figure as L|L, where the second L is the phoneme). In square 70, the probability that the phoneme pair "L, OW" will emit the letter "L" (i.e., a diphone) is entered. In square 72, the probability that phoneme "L" will emit the letter string "LO" is entered. In square 74, the sum of: (a) the probability that phoneme "L" will emit the letter "L" and (b) the probability that phoneme "OW" will emit the letter "O" is entered. As is apparent, a path has been created from square 68 to square 74 and the sum represents the score of the path to this square. Two paths lead to square 76 in table 66. In one search approach, scores are calculated for each of these paths and the higher of the two scores is then recorded for the square along with the corresponding path information. The first path that leads to square 76 comes from square 68 and involves the emission of the letter "O" by the phoneme pair "OW, K." The score for this path is the sum of: (a) the probability that phoneme "L" will emit the letter "L" (from square 68) and (b) the probability that the phoneme pair "OW, K" will emit the letter "O." The second path that leads to square 76 comes from square 70 and involves the emission of the letter "O" by the phoneme "K." The score for this path is the sum of: (a) the probability that the phoneme pair "L, OW" will emit the letter "L" (from square 70) and (b) the probability that phoneme "K" will emit the letter "O." After scores have been calculated for the two paths, the higher score is recorded along with the corresponding path information.

In square 78, the probability that the phoneme "L" will emit the letter string "LOC" is entered as the score. Like square 76, two paths lead square 80. The first path, from square 68, has a score that is the sum of: (a) the probability that phoneme "L" will emit the letter "L" (from square 68) and (b) the probability that phoneme "OW" will emit the letter string "OC." The second path, from square 72, has a score that is the sum of: (a) the probability that phoneme "L" will emit the letter string "LO" (from square 72) and (b) the probability that phoneme "OW" will emit the letter "C." Again, the higher score is recorded along with the corresponding path information. Three paths lead to square 82. The first path, from square 74, has a score that is the sum of the score of square 74 and the probability that phoneme "K" will emit the letter "C." The second path, from square 70, has a score that is the sum of the score of square 70 and the probability that phoneme "K" will emit the letter string "OC." The third path, from square 72, has a score that is the sum of the score of square 72 and the probability that phoneme pair "OW, K" will emit the letter "C." The highest of the three scores is then recorded along with corresponding path information.

The same basic procedure may be used to complete the remainder of the table 66. For example, to determine the score for square 84, five possible paths must be considered (i.e., paths from squares 86, 88, 90, 92, and 94). The five candidate scores are calculated as follows:

$$\text{score(square 84)} = \text{score(square 86)} + \log P(\text{OCAT} \mid \text{SH})$$

$$\text{score(square 84)} = \text{score(square 88)} + \log P(\text{CAT} \mid \text{SH})$$

$$\text{score(square 84)} = \text{score(square 90)} + \log P(\text{AT} \mid \text{SH})$$

$$\text{score(square 84)} = \text{score(square 92)} + \log P(\text{T} \mid \text{SH})$$

$$\text{score(square 84)} = \text{score(square 94)} + \log P(\text{T} \mid \text{EY,SH})$$

The best of the five candidate scores is selected as the score for square 84 and the corresponding path information is recorded. In one approach, two arrays are filled during the search. The first array (i.e., score(letter, phoneme)) records the score of the best path to each square in the table 66. The second array (i.e., psi(letter, phoneme)) records the square from which each square in the array was reached on the best path to that square.

After the table 66 has been filled, a backtracking process is performed to identify the best path through the table. Starting with the last row in the last column of the table 66, the psi array is used to identify the path that resulted in that high score. This identified path corresponds to the optimal segmentation for the subject word. This Viterbi process is performed for each word in the phonetic dictionary. Referring back to Fig. 3, after supervised segmentation has been performed for the words, new phoneme emission and diphone emission probability matrices are generated using the results of the supervised segmentation (block 40). A simple count strategy may again be used, as described previously. Cycles of supervised segmentation and regeneration of the probability matrices may then be repeated, in an iterative process, until a predetermined condition has been satisfied (block 42). Normally, the sum of the scores of all dictionary words will increase monotonically with each successive cycle. In one approach, cycles of segmentation and probability matrix re-calculation are performed until the sum of the scores ceases to grow (or grows at below a predetermined rate). In another approach, a predetermined number of cycles is performed. Other termination conditions for the iterative process are also possible.

In at least one embodiment of the invention, "annealing" is used during the generation of the new phoneme emission probability matrix and the new diphone emission probability matrix (see block 40). That is, all elements of the probability matrices that are below a predetermined threshold value are set to the threshold value (or to another value). Annealing may also be used during subsequent cycles of segmentation and matrix regeneration. In one possible technique, a first threshold value (e.g., 0.15) is used during the initial regeneration of the probability matrices and a progressively smaller threshold value is used on each successive cycle.

At this point in the training process, the phoneme emission probability matrix and the diphone emission probability matrix have been refined from their original incarnations. A number of diphones have been identified by the process and are listed in the diphone emission probability matrix along with corresponding count information. The diphone that typically occurs most often involves the emission of the letter "X" by the phoneme pair "K, S." The second most frequent diphone usually involves the emission of the letter "U" by the phoneme pair "Y, UW." Many other diphones are also identified, including many low count diphones. The identified diphones are now pruned to reduce the total number of legal diphones recognized by the system (block 44). In one approach, a predetermined number of diphones (e.g., 10 diphones) having the highest counts are selected during the pruning process. In another approach, all diphones having a count greater than a predetermined value are selected. Other pruning techniques are also possible.

With reference to Fig. 4, an extended set of phonemes is now established by adding the pruned diphones (block 46). In one implementation, for example, 10 pruned diphones and the empty phoneme are added to the 39 phonemes of the CMU Pronouncing Dictionary to generate an extended set of phonemes. From this point forward, the diphones are treated as ordinary phonemes and are thus permitted to emit letter strings having one to four letters. Using the extended set of phonemes, a supervised segmentation of each of the words in the dictionary is again undertaken (block 48). The supervised segmentation may include, for example, a Viterbi search similar to the one illustrated in Fig. 5. However, the Viterbi search will now be limited to the pruned set of diphones, rather than considering all possible diphones. Also, if the Viterbi search table includes a legal diphone within its vertical axis for a particular word, the search process must now consider that diphone emitting letter strings from one to four letters in length, rather than single letters as before. Otherwise, the scores for each of the squares are calculated in a similar manner to that described previously. For each word in the dictionary, a corresponding table is filled in and backtracking is used to identify the optimal path through the table. Even if the dictionary pronunciation of a word includes a phoneme pair that forms a legal diphone, the Viterbi process will not automatically interpret the pair as such. That is, the phoneme pair will only be interpreted as a diphone if the highest scored path recognizes it as a diphone.

After supervised segmentation is complete, a new phoneme emission probability matrix is generated using the segmentation results (block 50). A phoneme "transition" probability matrix is also generated at this point. In addition to the original phonemes, the phoneme emission probability matrix will also include emission probabilities for the pruned diphones. The phoneme transition probability matrix will be based on probabilities that, given a previous phoneme, a particular phoneme will occur (i.e., P(phoneme| previous phoneme). As before, a simple count approach may be used to generate these matrices. In another approach, the phoneme transition probability matrix is initialized so that all transition probabilities have the same value. These initial values may then change during subsequent cycles of segmentation and matrix regeneration. After the new phoneme emission probability matrix and phoneme transition probability matrix have been generated, one or both of the matrices may be annealed as described previously.

Supervised segmentation is again performed for the dictionary words using the new phoneme emission probability information and the new phoneme transition probability information (block 52). Again, a Viterbi search may be performed to segment the words. However, the scores that are generated during the search will now involve transition probabilities as well as emission probabilities. For example, with reference to Fig. 5, to generate a score for square 84, the following candidate scores have to be considered:

$$\text{score(square 84)} = \text{score(square 86)} + \log P(\text{OCAT} \mid \text{SH}) + \log P(\text{SH} \mid \text{phoneme 86})$$

$$\text{score(square 84)} = \text{score(square 88)} + \log P(\text{CAT} \mid \text{SH}) + \log P(\text{SH} \mid \text{phoneme 88})$$

$$\text{score(square 84)} = \text{score(square 90)} + \log P(\text{AT} \mid \text{SH}) + \log P(\text{SH} \mid \text{phoneme 90})$$

$$\text{score(square 84)} = \text{score(square 92)} + \log P(\text{T} \mid \text{SH}) + \log P(\text{SH} \mid \text{phoneme 92})$$

where phoneme 86 is the phoneme associated with the best path leading to square 86, phoneme 88 is the phoneme associated with the best path leading to square 88, phoneme 90 is the phoneme associated with the best path leading to square 90, and phoneme 92 is the phoneme associated with the best path leading to square 92. If phoneme pair "EY, SH" were a legal diphone, additional candidate scores would also have to be considered for this diphone (for letter string having lengths from 1 to 4 letters). The best candidate score is selected and recorded along with the corresponding path information. For each word in the dictionary, a Viterbi search table is generated as described above. Backtracking is then used to identify the optimal path through the table to determine the appropriate segmentation for the word.

Using the results of the latest segmentation, an updated phoneme emission probability matrix and phoneme transition probability matrix are generated (block 54). As before, a count approach may be used. For example, in one implementation, the following counts are generated for all phonemes: count (letter string | phoneme) and count (phoneme| previous phoneme). The count information is then used to generate the probability matrices. The supervised segmentation and matrix regeneration cycle may then be repeated until a predetermined condition has been satisfied (block 56). For example, the cycle may be repeated until the sum of the scores for all words ceases to grow (or grows at below a predetermined rate) or a predetermined number of cycles has been performed. Annealing may be performed during one or more of these cycles, as described previously. Eventually, final phoneme emission probability and phoneme transition probability matrices are generated. These matrices are stored for use during future text-to-phoneme parsing operations (block 58).

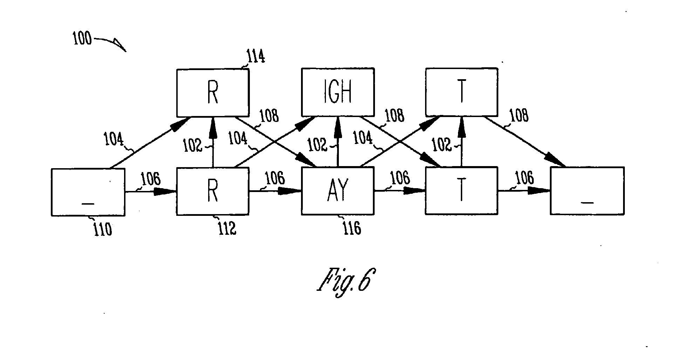

In the discussion above, it was assumed that a conventional Markov process (such as the one illustrated in Fig. 1) was being used. In at least one embodiment of the present invention, a modified HMM process is used. For example, Fig. 6 is a diagram illustrating a generalized HMM process 100 in accordance with an embodiment of the present invention. As illustrated in Fig. 6, a previous phoneme (e.g., empty phoneme 110) is first presumed to induce a subsequent phoneme (e.g., phoneme "R" 112). The previous and subsequent phonemes are then presumed to induce a letter string (e.g., letter "R" 114). This is illustrated in Fig. 6 by arrows 102 and 104. The subsequent phoneme (e.g., phoneme "R" 112) and the letter string (e.g., letter "R" 114) are then presumed to induce a next phoneme (e.g., phoneme "AY" 116). This is illustrated in Fig. 6 by arrows 106 and 108. This process continues from left to right with phoneme i and phoneme i+1 inducing letter string i+1 and phoneme i+1 and letter string i+1 inducing phoneme i+2.

To implement the generalized HMM process 100 of Fig. 6, a "generalized" emission probability matrix and a "generalized" transition probability matrix may be defined. The generalized emission probability matrix may include, for example, probabilities that specific letter strings will be induced given a phoneme and a previous phoneme (i.e., P(letter string | phoneme, previous phoneme)). The generalized transition probability matrix may include, for example, probabilities that specific phonemes will occur given a previous phoneme and a previous letter string (i.e., P(phoneme | previous phoneme, previous letter string)). In at least one embodiment of the present invention, the training method illustrated in Figs. 3 and 4 is modified to generate the generalized emission probability matrix and generalized transition probability matrix described above. For example, in block 54 of Fig. 4, instead of generating a phoneme emission probability matrix and a phoneme transition probability matrix, the generalized emission probability matrix and generalized transition probability matrix may be generated using the results of the most recent supervised segmentation. Additional cycles of segmentation and matrix regeneration may then be performed to further refine the generalized emission probability matrix and generalized transition probability matrix. Final matrices are eventually generated and stored for later use during text-to-phoneme parsing operations.

After training is completed, the probability matrices that were generated during the training phase may be used to perform text-to-phoneme parsing. That is, the matrices may be used to generate one or more phoneme strings corresponding to a written word. The individual word that is parsed does not have to be one of the words from the phonetic dictionary that was used during training. On the contrary, a text-to-phoneme parser in accordance with the invention may be used to parse a wide variety of words not typically included within a phonetic dictionary, such as personal names. In one approach, after a written word has been entered for parsing, an "unsupervised" segmentation of the word is undertaken. This segmentation is called "unsupervised" because no prior knowledge of the underlying phoneme string is assumed. The segmentation may be performed in a manner similar to the previously described segmentation operations. That is, a Viterbi search table may be used that includes the letters of the written word in the horizontal axis and phonemes in the vertical axis. However, instead of using the phonemes of the word itself (which are unknown at this point), all of the phonemes in the extended set of phonemes are included in the vertical axis of the table. The search process proceeds in substantially the same manner described previously. Scores are generated for individual squares in the table while moving from left to right in a column by column fashion. Path information is also recorded for the squares. When the table is complete, a best overall score is identified and backtracking is used to determine the corresponding path. This path corresponds to the most likely phoneme string for the input word.

When using the generalized HMM process, the text-to-phoneme parsing (decoding) may proceed as follows. The parser will work on a table whose horizontal axis includes the letters to be parsed and whose vertical axis includes the generalized phonemes (all phonemes participate). Three arrays are defined for the table that are filled recursively, letter by letter (i.e., column by column). The arrays are the "score" array, the "psiP" array, and the "psiL" array. The variable score[I][P] records the score of the best path through the table that ends at the square of the I'th letter and the P'th phoneme. The variable psiL[I][P] records the number of letters that were emitted in the last segment of the path by phoneme P (from one to four letters in one embodiment). Given psiL[I][P], it is known that the best path started from letter I-psiL[I][P]. The identity of the phoneme from which this path started thus needs to be determined. This phoneme is indicated by psiP[I][P]. The score of the path that arrives at the [I][P1] square from the [I-3][P2] square is given by the following recursive relation:

$$\text{score}[I][P1] = \text{score}[I-3][P2] + \log P[P1|P2, \text{letter string attached with } P2)$$
$$+ \log P(3 \text{ letters } I-2, I-1, I \mid P1, P2)$$

where the first logP term is the generalized transition term, the element "letter string attached with P2" is obtained from psiL[I-3][P2], and the second logP term is the generalized emission term. The path with the highest score is chosen. For example, if the score above is the highest score, then we set psiL[I][P1]=3 and psiP[I][P1]=P2.

To parse a given word, one must first "enter" the word and eventually "exit" the word. In one embodiment of the invention, an empty letter is placed before and after the word to be parsed. For example, the word "RIGHT" is represented as "_RIGHT_" (the underscore indicating an empty letter). In the word "_RIGHT_," the first underscore corresponds to index I=0, the "R" corresponds to index I=1, and so on. All entrance paths start from the square [I=0][phoneme=0]. One possible entrance path is given by the recursion:

$$\text{score}[I=1][P1=R] = \text{score}[I=0][phoneme=0] + \log P[P1=R|P2=0, \text{letter\_string=empty})$$
$$+ \log P(\text{letter\_string=R}|P1=R, P2=\text{empty})$$

All exit paths end at the square [I=6][P1=empty]. One possible exit path is given by the recursion:

$$\text{score}[I=6][P1=\text{empty}] = \text{score}[I=5][P2=T] + \log P[P1=\text{empty}|P2=T, \text{letter\_string=T})$$
$$+ \log P(\text{letter=empty}|P1=\text{empty}, P2=T)$$

If the word "RIGHT" is parsed, there are seven columns in the table including the empty letters before and after the word. The "score" and "psi" arrays are filled column by column, starting from I=1 and leading up to I=6 (the empty exit letter). Only the empty phoneme is allowed for the empty letter (as shown in the exit equation above). After filling the arrays, backtracking is used to find the best parsing, starting from the square [I=6][P1=empty].

In at least one embodiment of the invention, the N-best phoneme strings corresponding to a written word are generated during the parsing process (where N is a positive integer greater than 1). These N-best phoneme strings may be presented to a user, for example, to allow the user to select a phoneme string (i.e., a pronunciation) for the input word from the N choices. To generate the N-best strings, it is necessary to keep track of the N-best paths leading to each square in the search table. Backtracking is then performed for the N-best scores in the last column of the table. The N-best phoneme strings offered by the parser for a given word may be organized as a pronunciation network. This organization requires less memory when transformed into an acoustic model of the word.

To reduce memory usage in the parser, the number of best paths that are saved for each letter of the written word (i.e., each column of the search table) may be limited. For example, in each column of the search table, instead of saving a best path for all of the phonemes listed in the vertical axis (e.g., 49 phonemes in one embodiment), best path information may be saved for only a fraction of the phonemes. While testing this approach, it was found that little or no performance degradation was experienced when only the 10 best paths were saved for each column of a table. At the same time, a five-fold reduction in memory use was achieved. A similar result may be obtained when searching for the N-best phoneme strings.

In the description above, various data structures (e.g., matrices, arrays, etc.) have been identified in conjunction with the disclosed embodiments. It should be appreciated that the particular formats within which data is assembled and stored in these embodiments are not meant to be limiting.

## Claims

1. A method for use in training a text-to-phoneme parser system, comprising:

   segmenting words based on known word pronunciations to generate segmentation results;
   generating probability information using said segmentations results, said probability information including a plurality of probability values; **characterised by**
   identifying probability values within said probability information that are below a first threshold value;
   changing said identified probability values to a predetermined value;
   generating an extended set of phonemes based on the probability information, the extended set of phonemes including diphones selected during a pruning process; and
   segmenting the words based on the extended set of phonemes to generate selected phoneme and diphone probability information by performing the following steps:

   (i) presuming a previous phoneme to induce a subsequent phoneme;
   (ii) presuming the previous phoneme and the subsequent phoneme to induce a letter string; and
   (iii) presuming the subsequent phoneme and the letter string to induce a next phoneme.

2. The method of claim 1, wherein said predetermined value is said first threshold value.

3. The method of claim 1, further comprising re-segmenting said words, after changing said identified probability values, based on said probability information to generate new segmentation results.

4. The method of claim 3, further comprising:

   generating new probability information using said new segmentations results, said new probability information including a plurality of probability values;
   detecting probability values within said new probability information that are below a second threshold value; and
   changing said detected probability values to a second predetermined value.

5. The method of claim 4, wherein said second threshold value is less than said first threshold value.

6. The method of claim 1, wherein said probability information includes phoneme emission probabilities.

7. The method of claim 1, wherein said probability information includes a probability that a specific letter string will be induced given a present phoneme and a previous phoneme.

8. The method of claim 1, wherein said probability information includes diphone emission probabilities, said diphone emission probabilities including a probability that a specific letter will be emitted by a given phoneme pair.

9. The method of claim 1, wherein said probability information includes phoneme transition probabilities.

10. The method of claim 9, wherein said phoneme transition probabilities include a probability that a specific phoneme will be induced given a previous phoneme.

11. The method of claim 9, wherein said phoneme transition probabilities include a probability that a specific phoneme will be induced given a previous phoneme and a letter string emitted by said previous phoneme.

12. The method of claim 9, wherein segmenting words includes segmenting words based on corresponding pronunciations within a phonetic dictionary.

13. A text-to-phoneme parser system with training means, the system comprising:

   means for segmenting words based on known word pronunciations to generate segmentation results;
   means for generating probability information using said segmentations results, said probability information including a plurality of probability values; **characterised by**
   means for identifying probability values within said probability information that are below a first threshold value;
   means for changing said identified probability values to a predetermined value;
   means for generating an extended set of phonemes based on the probability information, the extended set of phonemes including diphones selected during a pruning process; and
   means for segmenting the words based on the extended set of phonemes to generate selected phoneme and diphone probability information and adapted to perform the following steps:

   (i) presuming a previous phoneme to induce a subsequent phoneme;
   (ii) presuming the previous phoneme and the subsequent phoneme to induce a letter string; and
   (iii) presuming the subsequent phoneme and the letter string to induce a next phoneme.

14. A computer-readable medium having stored thereon instruction which, when executed by a computer, cause the computer to perform the method of any one of claims 1 to 12.

**Patentansprüche**

1. Verfahren für den Gebrauch beim Trainieren eines Text-zu-Phonem-Parser-Systems, das Folgendes aufweist:

   Segmentieren von Wörtern basierend auf bekannten Wortaussprachen, um Segmentierungsergebnisse zu erzeugen;
   Erzeugen von Wahrscheinlichkeitsinformation unter Einsatz der Segmentierungsergebnisse, wobei die Wahrscheinlichkeitsinformation mehrere Wahrscheinlichkeitswerte enthält; **gekennzeichnet durch**
   Identifikation von Wahrscheinlichkeitswerten innerhalb der Wahrscheinlichkeitsinformation, die unter einem ersten Schwellenwert liegen;
   Ändern der identifizierten Wahrscheinlichkeitswerte auf einen vorbestimmten Wert;
   Erzeugen eines erweiterten Satzes von Phonemen basierend auf der Wahrscheinlichkeitsinformation, wobei der erweiterte Satz von Phonemen Diphone enthält, die während eines Abschneidprozesses ausgewählt werden; und
   Segmentieren der Wörter basierend auf dem erweiterten Satz von Phonemen, um ausgewählte Phonem- und Diphonwahrscheinlichkeitsinformation **durch** Ausführen der folgenden Schritte zu erzeugen:

   (i) Voraussetzen eines vorhergehenden Phonems, um ein darauf folgendes Phonem zu induzieren;
   (ii) Voraussetzen des vorhergehenden Phonems und des darauf folgenden Phonems, um eine Buchstabenzeichenfolge zu induzieren; und
   (iii) Voraussetzen des darauf folgenden Phonems und der Buchstabenzeichenfolge, um ein nächstes Phonem zu induzieren.

2. Verfahren nach Anspruch 1, bei dem der vorbestimmte Wert der erste Schwellenwert ist.

3. Verfahren nach Anspruch 1, das ferner das Neusegmentieren der Wörter aufweist, nachdem die identifizierten Wahrscheinlichkeitswerte geändert wurden, basierend auf der Wahrscheinlichkeitsform, um neue Segmentierungsergebnisse zu erzeugen.

**4.** Verfahren nach Anspruch 3, das ferner Folgendes aufweist:

Erzeugen neuer Wahrscheinlichkeitsinformation unter Einsatz der neuen Segmentierungsergebnisse, wobei die neue Wahrscheinlichkeitsinformation mehrere Wahrscheinlichkeitswerte aufweist;
Erfassen von Wahrscheinlichkeitswerten innerhalb der neuen Wahrscheinlichkeitsinformation, die unter einem zweiten Schwellenwert liegen; und
Ändern der erfassten Wahrscheinlichkeitswerte auf einen zweiten vorbestimmten Wert.

**5.** Verfahren nach Anspruch 4, wobei der zweite Schwellenwert kleiner ist als der erste Schwellenwert.

**6.** Verfahren nach Anspruch 1, wobei die Wahrscheinlichkeitsinformation Phonemausgabewahrscheinlichkeiten enthält.

**7.** Verfahren nach Anspruch 1, wobei die Wahrscheinlichkeitsinformation eine Wahrscheinlichkeit enthält, dass eine spezifische Buchstabenzeichenfolge angesichts eines gegenwärtigen Phonems und eines vorhergehenden Phonems induziert wird.

**8.** Verfahren nach Anspruch 1, wobei die Wahrscheinlichkeitsinformation Diphonausgabewahrscheinlichkeiten enthält, wobei die Diphonausgabewahrscheinlichkeiten eine Wahrscheinlichkeit enthalten, dass ein spezifischer Buchstabe von einem bestimmten Phonempaar ausgegeben wird.

**9.** Verfahren nach Anspruch 1, wobei die Wahrscheinlichkeitsinformation Phonemübergangswahrscheinlichkeiten enthält.

**10.** Verfahren nach Anspruch 9, wobei die Phonemübergangswahrscheinlichkeiten eine Wahrscheinlichkeit enthalten, dass ein spezifisches Phonem angesichts eines vorhergehenden Phonems induziert wird.

**11.** Verfahren nach Anspruch 9, wobei die Phonemübergangswahrscheinlichkeiten eine Wahrscheinlichkeit enthalten, dass ein spezifisches Phonem angesichts eines vorhergehenden Phonems und einer Buchstabenzeichenfolge, der von dem vorhergehenden Phonem ausgegeben wird, induziert wird.

**12.** Verfahren nach Anspruch 9, wobei das Segmentieren von Wörtern das Segmentieren von Wörtern basierend auf entsprechenden Aussprachen innerhalb eines phonetischen Wörterbuchs aufweist.

**13.** Text-zu-Phonem-Parser-System mit Trainingsmitteln, wobei das System Folgendes aufweist:

Mittel zum Segmentieren von Wörtern basierend auf bekannten Wortaussprachen, um Segmentierungsergebnisse zu erzeugen;
Mittel zum Erzeugen von Wahrscheinlichkeitsinformation unter Einsatz der Segmentierungsergebnisse, wobei die Wahrscheinlichkeitsinformation mehrere Wahrscheinlichkeitswerte enthält, **gekennzeichnet durch**
Mittel zum Identifizieren von Wahrscheinlichkeitswerten innerhalb der Wahrscheinlichkeitsinformation, die unter einem ersten Schwellenwert liegen;
Mittel zum Ändern der identifizierten Wahrscheinlichkeitswerte auf einen vorbestimmten Wert;
Mittel zum Erzeugen eines erweiterten Satzes von Phonemen basierend auf der Wahrscheinlichkeitsinformation, dem erweiterten Satz von Phonemen mit Diphonen, die während eines Abschneidprozesses ausgewählt wurden; und
Mittel zum Segmentieren der Wörter basierend auf dem erweiterten Satz von Phonemen, um ausgewählte Phonem- und Diphonwahrscheinlichkeitsinformation zu erzeugen, die die folgenden Schritte ausführen können:

(i) Voraussetzen eines vorhergehenden Phonems, um ein darauf folgendes Phonem zu induzieren;
(ii) Voraussetzen des vorhergehenden Phonems und des darauf folgenden Phonems, um eine Buchstabenzeichenfolge zu induzieren; und
(iii) Voraussetzen des darauf folgenden Phonems und der Buchstabenzeichenfolge, um ein nächstes Phonem zu induzieren.

**14.** Computerlesbarer Träger, auf dem Anweisungen gespeichert sind, die beim Ausführen durch einen Computer den Computer veranlassen, das Verfahren eines der Ansprüche 1 bis 12 auszuführen.

**Revendications**

1.  Procédé destiné à être utilisé dans l'apprentissage d'un système analyseur texte-phonème, comprenant :

    la segmentation de mots basée sur des prononciations de mots connus pour générer des résultats de segmentation ;
    la génération d'informations de probabilité utilisant lesdits résultats de segmentation, lesdites informations de probabilité comprenant une pluralité de valeurs de probabilité ; **caractérisé par**
    l'identification de valeurs de probabilité dans lesdites informations de probabilité qui sont en dessous d'une première valeur de seuil ;
    le changement desdites valeurs de probabilité identifiées en une valeur prédéterminée ;
    la génération d'un ensemble étendu de phonèmes basé sur les informations de probabilité, l'ensemble étendu de phonèmes comprenant des diphones sélectionnés pendant un traitement d'élagage ; et
    la segmentation des mots basée sur l'ensemble étendu de phonèmes pour générer un phonème sélectionné et des informations de probabilité de diphone en réalisant les étapes suivantes :

    (i) supposition d'un phonème précédent pour induire un phonème qui suit ;
    (ii) supposition du phonème précédent et du phonème qui suit pour induire une chaîne de lettres ; et
    (iii) supposition du phonème qui suit et de la chaîne de lettres pour induire un phonème suivant.

2.  Procédé selon la revendication 1, dans lequel ladite valeur prédéterminée est ladite première valeur de seuil.

3.  Procédé selon la revendication 1, comprenant en outre une resegmentation desdits mots, après changement desdites valeurs de probabilité identifiées, sur la base desdites informations de probabilité pour générer de nouveaux résultats de segmentation.

4.  Procédé selon la revendication 3, comprenant en outre :

    la génération de nouvelles informations de probabilité utilisant lesdits nouveaux résultats de segmentation, lesdites nouvelles informations de probabilité comprenant une pluralité de valeurs de probabilité ;
    la détection de valeurs de probabilité dans lesdites nouvelles informations de probabilité qui sont sous une seconde valeur de seuil ; et
    le changement desdites valeurs de probabilité détectées en une seconde valeur prédéterminée.

5.  Procédé selon la revendication 4, dans lequel ladite seconde valeur de seuil est inférieure à ladite première valeur de seuil.

6.  Procédé selon la revendication 1, dans lequel lesdites informations de probabilité comprennent des probabilités d'émission de phonème.

7.  Procédé selon la revendication 1, dans lequel lesdites informations de probabilité comprennent une probabilité qu'une chaîne de lettres spécifique sera induite étant donné un phonème présent et un phonème précédent.

8.  Procédé selon la revendication 1, dans lequel lesdites informations de probabilité comprennent des probabilités d'émission de diphone, lesdites probabilités d'émission de diphone comprenant une probabilité qu'une lettre spécifique sera émise par une paire de phonèmes donnée.

9.  Procédé selon la revendication 1, dans lequel lesdites informations de probabilité comprennent des probabilités de transition de phonème.

10. Procédé selon la revendication 9, dans lequel lesdites probabilité de transition de phonème comprennent une probabilité qu'un phonème spécifique sera induit étant donné un phonème précédent.

11. Procédé selon la revendication 9, dans lequel lesdites probabilités de transition de phonème comprennent une probabilité qu'un phonème spécifique sera induit étant donné un phonème précédent et une chaîne de lettres émise par ledit phonème précédent.

12. Procédé selon la revendication 9, dans lequel la segmentation de mots comprend la segmentation de mots basée

**11**

sur des prononciations correspondantes dans un dictionnaire phonétique.

13. Système analyseur texte-phonème avec un moyen d'apprentissage, le système comprenant :

un moyen pour segmenter des mots basés sur des prononciations de mot connues pour générer des résultats de segmentation ;

un moyen pour générer des informations de probabilité utilisant lesdits résultats de segmentation, lesdites informations de probabilité comprenant une pluralité de valeurs de probabilité ; **caractérisé par**

un moyen pour identifier des valeurs de probabilité dans lesdites informations de probabilité qui sont sous une première valeur de seuil ;

un moyen pour changer lesdites valeurs de probabilité identifiées en une valeur prédéterminée ;

un moyen pour générer un ensemble étendu de phonèmes basé sur les informations de probabilité, l'ensemble étendu de phonèmes comprenant des diphones sélectionnés pendant un traitement d'élagage ; et

un moyen pour segmenter les mots sur la base de l'ensemble étendu de phonèmes pour générer un phonème sélectionné et des informations de probabilité de diphone et adapté pour réaliser les étapes suivantes :

(i) supposition d'un phonème précédent pour induire un phonème qui suit ;

(ii) supposition du phonème précédent et du phonème qui suit pour induire une chaîne de lettres ; et

(iii) supposition d'un phonème qui suit et de la chaîne de lettres pour induire un phonème suivant.

14. Support lisible par ordinateur ayant stocké sur celui-ci des instructions qui, lorsqu'elles sont exécutées par un ordinateur, conduisent l'ordinateur à réaliser le procédé d'une quelconque des revendications 1 à 12.

10 ⌐

R          IGH          T

↑~12        ↑~12        ↑~12

__ →14→ R →14→ AY →14→ T →14→ __

*Fig.1*

20 ⌐

26
PROBABILITY
DATABASE

↕

22                                        24
TEXT              HMM-BASED         PHONEME
ENTRY    WORD→    TEXT TO     →    STRING(S)
                 PHONEME
                 PARSER

*Fig.2*

30 ⌐⌐

32

```
┌─────────────────────────────────────────────────┐
│           PROVIDE PHONETIC DICTIONARY            │
└─────────────────────────────────────────────────┘
```

34

```
┌─────────────────────────────────────────────────┐
│    PERFORM LINEAR SEGMENTATION ON WORDS IN       │
│    PHONETIC DICTIONARY BASED ON DICTIONARY       │
│                 PRONUNCIATION                    │
└─────────────────────────────────────────────────┘
```

36

```
┌─────────────────────────────────────────────────┐
│    GENERATE INITIAL PHONEME EMISSION PROBABILITY │
│    MATRIX AND INITIAL DIPHONE EMISSION PROBABILITY│
│    MATRIX BASED ON RESULTS OF LINEAR SEGMENTATION│
└─────────────────────────────────────────────────┘
```

38

```
┌─────────────────────────────────────────────────┐
│   PERFORM SUPERVISED SEGMENTATION FOR EACH WORD  │
│   USING INITIAL PHONEME EMISSION PROBABILITY MATRIX│
│   AND INITIAL DIPHONE EMISSION PROBABILITY MATRIX│
└─────────────────────────────────────────────────┘
```

40

```
┌─────────────────────────────────────────────────┐
│     GENERATE NEW PHONEME EMISSION PROBABILITY    │
│    MATRIX AND DIPHONE EMISSION PROBABILITY MATRIX│
│     BASED ON RESULTS OF SUPERVISED SEGMENTATION  │
└─────────────────────────────────────────────────┘
```

42

```
┌─────────────────────────────────────────────────┐
│   REPEAT SUPERVISED SEGMENTATION AND GENERATION  │
│      OF NEW PROBABILITY MATRICES UNTIL           │
│    PREDETERMINED CONDITION IS SATISFIED          │
└─────────────────────────────────────────────────┘
```

44

```
┌─────────────────────────────────────────────────┐
│            PRUNE RESULTING DIPHONES              │
└─────────────────────────────────────────────────┘
```

( A )

*Fig.3*

(A)

46

FORM EXTENDED SET OF PHONEMES THAT INCLUDES PRUNED DIPHONES

48

PERFORM SUPERVISED SEGMENTATION OF WORDS USING EXTENDED SET OF PHONEMES

50

GENERATE NEW PHONEME EMISSION PROBABILITY MATRIX AND TRANSITION PROBABILITY MATRIX BASED ON RESULTS OF LATEST SUPERVISED SEGMENTATION

52

PERFORM SUPERVISED SEGMENTATION OF WORDS USING EXTENDED SET OF PHONEMES, PHONEME EMISSION PROBABILITY MATRIX, AND PHONEME TRANSITION PROBABILITY MATRIX

54

GENERATE NEW PHONEME EMISSION PROBABILITY MATRIX AND TRANSITION PROBABILITY MATRIX BASED ON RESULTS OF LATEST SUPERVISED SEGMENTATION

56

REPEAT SUPERVISED SEGMENTATION AND GENERATION OF NEW PROBABILITY MATRICES UNTIL PREDETERMINED CONDITION IS SATISFIED

58

STORE FINAL PROBABILITY MATRICES FOR USE DURING TEXT-TO-PHONEME PARSING

*Fig. 4*

16

| | L | O | C | A | T | I | O | N |
|---|---|---|---|---|---|---|---|---|
| N | | | | | | | | |
| AH | | | | | | | | |
| SH | | | | | | | | |
| EY | | | | | | | | |
| K | | LIL+O\|OW,K<br>LIL,OW+O\|K | L\|L+O\|OW+C\|K<br>LIL,OW+OC\|K<br>LO\|L+C\|OW,K | | | | | |
| OW | LIL,OW | LIL+O\|OW | LIL+OC\|OW<br>LO\|L+C\|OW | | | | | |
| L | LIL | LO\|L | LOC\|L | | | | | |

66
86 88 90 92 84
76 70 68
72 74 78 80 82 94

*Fig. 5*

*Fig.6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5995926 A

**Non-patent literature cited in the description**

• Stochastic Phonographic Transduction for English. **LUK RWP et al.** Computer Speech and Language. Elsevier, 1996, vol. 10, 133-153